# EUROPÄISCHE PATENTSCHRIFT

(11) **EP 0 413 930 B1**
(45) Veröffentlichungstag und Bekanntmachung des Hinweises auf die Patenterteilung: **10.11.1993**
(21) Anmeldenummer: 90112101.2
(22) Anmeldetag: 26.06.1990
(51) Int. Cl.: B60T 13/16

(54) **Hydraulische Steuervorrichtung für die Bremse eines Anhängerfahrzeugs**
Hydraulic control device for the brake of a trailer vehicle
Dispositif de commande hydraulique pour le frein d'un véhicule à remorque

(30) Priorität: 26.07.1989 DE 8909049 U
(43) Veröffentlichungstag der Anmeldung: 27.02.1991
(73) Patentinhaber: ROBERT BOSCH GMBH, 70442 Stuttgart (DE)
(72) Erfinder: Sandau, Hartmut, Dipl.-Ing., D-7141 Schwieberdingen (DE)

(56) Entgegenhaltungen:
- DE-A- 3 242 707

## Beschreibung

### Stand der Technik

Die Erfindung geht aus von einer hydraulischen Steuervorrichtung nach der Gattung des Hauptanspruchs (Siehe DE-A-3242707). Bei einer derartigen bekannten Steuervorrichtung können im Bremsventil systemabhängig Instabilitäten auftreten, insbesondere dann, wenn die Druckanstiegsgeschwindigkeit in der Hydraulikanlage sehr hoch ist und der Ansteuerkreis eine geringe Steifigkeit aufweist. In diesem Fall macht der Steuerschieber des Vorsteuerventils einen zu großen Hub, so daß der Bremskreis kurzzeitig mit dem Rücklauf verbunden wird. Dadurch kommt es zum Druckabfall im Bremskreis. Das Bremsventil baut den Druck sofort wieder auf und der Vorgang beginnt aufs neue. Man hat schon versucht, Abhilfe dadurch zu schaffen, daß die Bewegung des Vorsteuerventils gedämpft wird. Dies vergrößert jedoch die Druckstufen, mit denen das Bremsventil den Bremsdruck aufbaut. Die Feinfühligkeit der Bremse wird dadurch verringert.

### Vorteile der Erfindung

Die erfindungsgemäße Steuervorrichtung mit den kennzeichnenden Merkmalen des Hauptanspruchs schafft eine Dämpfung für das Vorsteuerventil, die die Feinfühligkeit der Bremse nicht beeinträchtigt.

### Zeichnung

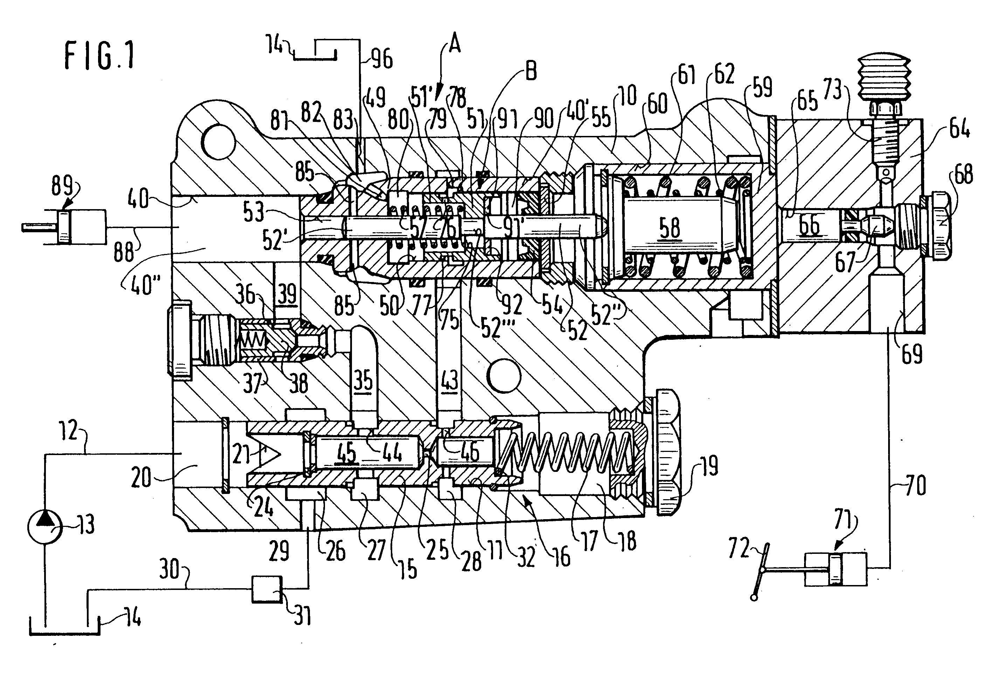

Ein Ausführungsbeispiel der Erfindung ist in der nachfolgenden Beschreibung und Zeichnung wiedergegeben. Letztere zeigt in Figur 1 einen Längsschnitt durch eine hydraulische Steuervorrichtung mit einem Bremsventil, in den Figuren 2 und 3 zwei Betriebszustände des Vorsteuerventils.

### Beschreibung des Ausführungsbeispiels

Die Steuervorrichtung weist ein Bremsventil mit einem Ventilgehäuse 10 mit einer durchgehenden Längsbohrung 11 auf, an welche eine Förderleitung 12 angeschlossen ist, in die eine Pumpe 13 aus einem Behälter 14 Druckmittel fördert. In der Längsbohrung 11 ist ein Steuerschieber 15 eines Stromregelventils 16 gleitend geführt, auf den entgegen dem einströmenden Druckmittel eine Regelfeder 17 einwirkt. Der hintere Teil der Bohrung 18, in welchem die Reglerfeder angeordnet ist, ist durch eine Verschlußschraube 19 dicht abgeschlossen. Dem Einlaß 20 der Längsbohrung 11 zugewandt, sind an der Stirnseite des Steuerschiebers 15 zwei Dreieckkerben 21 ausgebildet.

Im Inneren des Steuerschiebers 15 ist eine Blende 24 angeordnet, stromabwärts von dieser eine Drossel 25 mit wesentlich kleinerem Durchmesser als dem der Blende 24. An der Längsbohrung 11 sind drei Ringnuten 26, 27, 28 ausgebildet. Von der Ringnut 26 verläuft eine Bohrung 29 zum Aüßeren des Ventilgehäuses; dort ist eine Rückleitung 30 angeschlossen, die zum Behälter 14 oder zu einem Verbraucher 31 führt. In die Ringnut 27 mündet ein Kanal 35, in den eine Gehäusebohrung 36 eindringt, in welcher ein Ventileinsatz 37 mit kegeligem Rückschlagventil 38 eingesetzt ist. Von der Gehäusebohrung 36 geht ein Kanal 39 aus, der in eine parallel zur Längsbohrung 11 verlaufende Längsbohrung 40 mündet.

Von der Ringnut 28 geht ein Kanal 43 aus, welcher in eine Ringnut 47 an einem erweiterten Teil 40' der Längsbohrung 40 mündet. In den zwischen der Blende 24 und der Drosselbohrung 25 gelegenen Raum 45 im Steuerschieber münden mehrere Radialbohrungen 44, die inHöhe der Ringnut 27 liegen. Stromabwärts der Drosselbohrung 25 münden in den hohlen Steuerschieber mehrere Radialbohrungen 46, die in Höhe der Ringnut 28 liegen.

Im erweiterten Teil 40' der Längsbohrung 40 ist ein becherförmiger Gehäuseeinsatz 49 angeordnet, in dessen Gehäusebohrung 50 ein Schieber 51 gleitend gelagert und der durch eine Feder 57 belastet ist. An diesen ist mit geringem axialem Spiel x ein Kolben 52 angekoppelt. Er bewegt sich in einer Ringnut 52''' des Kolbens 52, dessen linker Teil 52' dicht in einer achsgleich zur Gehäusebohrung verlaufenden Schieberbohrung 53 gleitet, während sein rechter Teil 52'' durch eine Dichtmanschette 54 nach außen geführt ist. Diese Teile bilden ein Vorsteuerventil B für den Steuerschieber 15. Die Dichtmanschette stützt sich an einer Scheibe 55 ab, der rechte Teil 52'' des Kolbens liegt an einem Federwiderlager 58 an. Dieses ist in einem Kolben 59 angeordnet, der in einer Bohrung 60 gleitend gelagert ist, die achsgleich zur Gehäusebohrung 40 verläuft. Auf das Federwiderlager wirken Federn 61, 62 ein. Die Bohrung 60 ist durch ein Gehäuse 64 verschlossen, in dem eine Längsbohrung 65 gebildet ist, die achsgleich zur Gehäusebohrung 40 verläuft. In der Längsbohrung 65 ist ein Kolben 66 dicht gleitend gelagert. Er hat einen Stößel 67, der sich gegen eine die Längsbohrung 65 verschließende Verschlußschraube 68 legt. In die Längsbohrung 65 mündet eine im Gehäuse 64 verlaufende Querbohrung 69, an welche eine Leitung 70 angeschlossen ist. Diese geht aus von einem Druckgeber 71, der durch ein Bremspedal 72 betätigbar ist. An die Längsbohrung 65 ist noch eine Entlüftungsvorrichtung 73 angeschlossen.

Die Ringwand 51' des Schiebers 51 ist durch eine Querbohrung 76 durchbrochen, die Stirnwand durch eine Bohrung 75; erstere mündet in eine Ringnut 77, die mit einer Ringnut 78 im Gehäuseeinsatz 49 zusammenwirkt. Die beiden Ringnuten 77, 78 stehen über eine die Wand des Gehäuseeinsatzes 49 durchdringende Querbohrung 79 miteinander in Verbindung und damit mit dem Kanal 43. Vom Raum 80 innerhalb des Gehäuseeinsatzes 49 verläuft eine schräge Drosselbohrung 81 in eine Ringnut 82 des Bohrungsteils 40' der Gehäusebohrung 40. Von der Ringnut 82 verläuft eine Bohrung 83 zum Äußeren des Gehäuses. Weiterhin verläuft im vorderen Teil des Gehäuseeinsatzes 49 eine durchgehende Querbohrung 85, welche die Schieberbohrung 53 schneidet und mit der Ringnut 82 verbunden ist. Von der Längsbohrung 40 verläuft eine Leitung 88 zu einem Bremszylinder 89.

Im hinteren Teil des Schiebers 51 ist eine Drosselscheibe 91 angeordnet, deren Innendurchmesser 91' gegenüber dem Außendurchmesser des Kolbens 52 einen Drosselspalt 92 bildet. Die Drosselscheibe 91 wird durch einen Sicherungsring 93 in Position gehalten, die so angeordnet ist, daß die Drosselscheibe eine axiale Bewegungsmöglichkeit vom Maß y gegenüber Schulter 51' des Schiebers 51 und dem Sicherungsring 93 hat. Von der Bohrung 83 verläuft eine Leitung 96 zum Behälter 14.

Die Steuervorrichtung arbeitet wie folgt:

Die Pumpe 13 fördert Druckmittel über den Einlaß 20 in die Längsbohrung 11, wobei dieses auch in das Innere des Steuerschiebers gelangt. Ein Teil dieses Druckmittels fließt über die Blende 24, die Drosselbohrung 25 in den Raum 18. Über die Drosselbohrung 25 gelangt ein Steuerölstrom zur Querbohrung 46, von dieser in die Ringnut 28 und den Kanal 43, von dort über die Ringnut 47 in die Querbohrung 79 des Gehäuseeinsatzes 49 und dann in die Ringnuten 78, 77 und die Querbohrung 76 zum Raum 80. Von dort fließt das Druckmittel über die Drosselbohrung 81 und die Leitung 96 zum Behälter 14 ab. Infolge des Durchflußwiderstands an der Blende 25 und der dabei erzeugten Druckdifferenz wird der Steuerschieber 15 entgegen der Kraft der Regelfeder 17 nach rechts verschoben und stellt über die Dreieckkerben 21 Verbindung zur Ringnut 26 und zur Leitung 30 und damit zum Behälter oder Verbraucher her.

Wenn das Bremspedal 72 betätigt wird, baut sich in der Leitung 70 und in den Bohrungen 69 und 65 Druck auf, und der Kolben 66 wird entgegen dem Kolben 59 nach links verschoben. Das Federwiderlager 58 drückt auf den Kolben 52, wodurch dieser nach links verschoben wird samt dem Schieber 51. Dabei wird auch die Querbohrung 85 verschlossen.

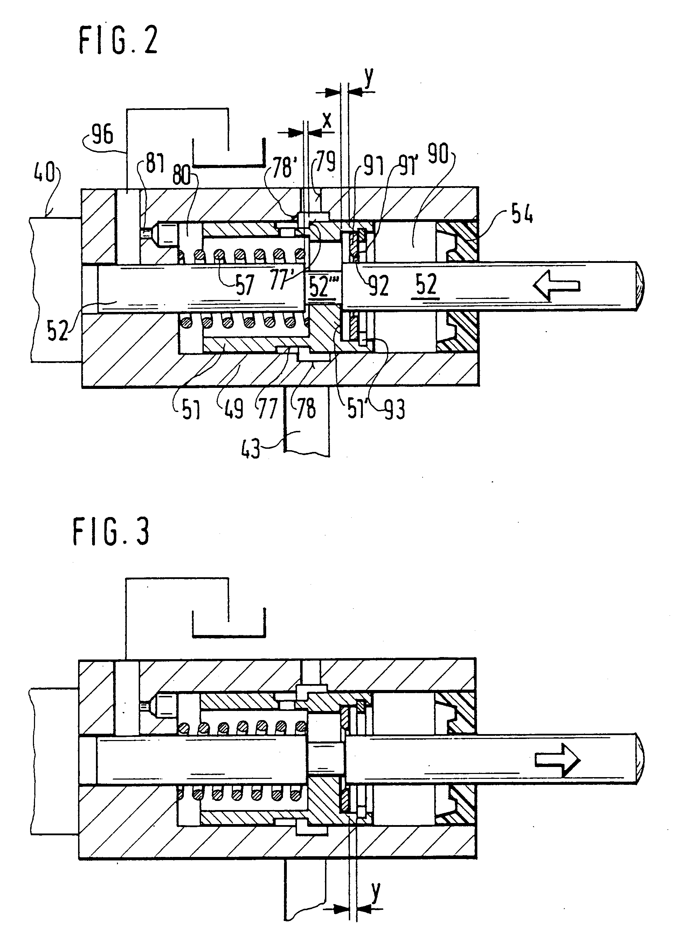

Wird durch die Betätigung des Bremspedals der Schieber 41 nach links bewegt, so liegt die Drosselscheibe 91 am Sicherungsring 93 an (Figur 2). Da das Steueröl vom Raum 80 zum Raum 90 über die Drosselscheibe 91 bzw. den Drosselspalt 92' fließen muß, wird die Bewegung des Schiebers 51 und damit die des Kolbens 52 gedämpft. Ist der Steuerölstrom an den Ringnuten 77, 78 durch die Steuerkanten 77', 78' durch die Bewegung des Schiebers 51 unterbrochen, so speist das Bremsventil Druckmittel in den Bremskreis (Raum 40, Leitung 88 und Bremszylinder 89); der Druck im Bremskreis steigt. Die Folge ist die Bewegungsumkehr des Schiebers 51 (Figur 3). Die Drosselscheibe 91 wird erst vom Schieber 51 mitgenommen, nachdem ihr axiales Spiel y aufgebraucht ist. Dieses ist so groß, daß wieder Verbindung an den Ringnuten 77, 78 entstanden ist, bevor die Dämpfung des Vorsteuerventils B bei der Bewegung nach rechts eintritt. Die Drosselscheibe 91 liegt dabei am Boden 51' des Schiebers 51 an. Die Druckstufen beim Bremsdruckaufbau werden bei dieser Dämpfung nicht erhöht, da das Vorsteuerventil ungebremst ausweichen kann, bis die Ringnuten 77, 78 wieder geöffnet haben (wegabhängige Dämpfung). Um den Raum 90 im Dämpfungsvorgang mit Druckmittel zu vesorgen, wird der Steuerölstrom durch die Drosselbohrung 81 angestaut. Beim Loslassen des Bremspedals wird der Kolben 52 nach rechts bewegt, wobei sein vorderer Teil 52' die Querbohrung 85 freigibt und dadurch den Bremszylinder 89 entlastet.

## Patentansprüche

1. Hydraulische Steuervorrichtung für die Bremse eines Anhängerfahrzeugs mit einem Bremsventil (A), die das von einer Druckmittelquelle geförderte Druckmittel über ein Stromregelventil (15) einem Verbraucher oder einem Behälter und über eine hydraulisch ansteuerbare Bremseinrichtung bei deren Aktivierung einem Bremszylinder (89) zuführt, wobei ein vom Stromregelventil abgezweigter Steuerölstrom unterbrochen wird und in der Bremseinrichtung ein Bremsdruck erzeugt wird, die einen mit einem Schieber (51) verbundenen Kolben (52) aufweist, der eine Dichtung (54) durchdringt und an einem Federwiderlager (58) anliegt, wobei sich zwischen der Dichtung und dem Schieber ein mit Druckmittel gefüllter Ringraum (90) befindet, das bei einer Bewegung des Schiebers über eine Drosselscheibe (91) zum Rücklauf verdrängt wird, die im hinteren Teil des Schiebers (51) zwischen einer Schulter (51') desselben und einem Anschlag (93) angeordnet ist, und wobei zwischen dem Ringraum (90) und dem Rücklauf eine zweite Drossel (81) angeordnet ist und der Schieber (51) axial geringfügig verschiebbar gegenüber dem Kolben (52) ist, dadurch gekennzeichnet, daß im Raum zwischen dem Anschlag (93)und der Schulter (51') des Schiebers (51) nur die Drosselscheibe (91) angeordnet ist, wobei die Drosselscheibe (91) zwischen dem Anschlag (93) und der Schulter (51') axial verschiebbar ist.

## Claims

1. Hydraulic control appliance for the brake of a trailer vehicle, having a brake valve (A) which supplies the pressure medium delivered from a pressure medium source via a flow control valve (15) to a consumption unit or a container and via a brake device, which can be hydraulically activated, to a brake cylinder (89) when the brake device is activated, a control oil flow branched off from the flow control valve being interrupted and a brake pressure being generated in the brake device which has a piston (52), which is connected to a slider (51), penetrates a seal (54) and is in contact with a spring abutment (58), there being an annular space (90) filled with pressure medium between the seal and the slider, which pressure medium is displaced, during a movement of the slider, to the return via a throttle disc (91) which is arranged in the rear part of the slider (51) between a shoulder (51') of the same and a stop (93), and a second throttle (81) being arranged between the annular space (90) and the return and the slider (51) being slightly displaceable axially relative to the piston (52), characterised in that only the throttle disc (91) is arranged in the space between the stop (93) and the shoulder (51') of the slider (51), the throttle disc (91) being axially displaceable between the stop (93) and the shoulder (51').

## Revendications

1. Dispositif de commande hydraulique du frein d'un véhicule à remorque, comportant une soupape de frein (A), qui fournit le fluide sous pression d'une source de fluide sous pression à travers un distributeur de régulation d'écoulement (15) à un utilisateur ou un réservoir et par une installation de frein à commande hydraulique, à un cylindre de frein (89) lorsque l'installation est activée, un courant d'huile de commande dérivé du distributeur de régulation de courant étant interrompu et une pression de frein étant générée dans l'installation de frein, cette installation comportant un piston (52) relié à un distributeur (51), le piston traversant un joint (54) et s'appuyant contre un appui à ressort (58), une chambre annulaire (90), remplie de fluide sous pression existant entre le joint et le tiroir, ce fluide étant refoulé dans le circuit de retour lors du mouvement du tiroir, à travers un disque à étranglement (91), cette rondelle étant prévue dans la partie arrière du tiroir (51) entre un épaulement (51') et une butée (93), et entre la chambre annulaire (90) et le retour il y a un second étranglement (81), le tiroir (51) pouvant coulisser légèrement de manière axiale par rapport au piston (52), dispositif de commande caractérisé en ce que dans le volume entre la butée (93) et l'épaulement (51') du tiroir (51) il n'y a que la rondelle d'étranglement (91), cette rondelle (91) pouvant coulisser axialement entre la butée (93) et l'épaulement (51').
